# EUROPEAN PATENT SPECIFICATION

(11) **EP 3 878 740 B1**
(45) Date of publication and mention of the grant of the patent: **07.06.2023**
(21) Application number: 20382182.2
(22) Date of filing: 12.03.2020
(51) Int. Cl.: B64C 39/00, B64D 27/02, B64C 21/06, B64C 25/04, B64C 3/10

(54) **AN ASYMMETRIC AIRCRAFT CONFIGURATION**
ASYMMETRISCHE FLUGZEUGKONFIGURATION
CONFIGURATION ASYMÉTRIQUE D'AÉRONEF

(43) Date of publication of application: 15.09.2021
(73) Proprietor: Airbus Operations, S.L., 28906 Getafe (ES)
(72) Inventor: GARCIA MARTIN, Diego, 28906 Getafe (ES); LLAMAS SANDIN, Raul Carlos, 28906 Getafe (ES)

(56) References cited:
- GB-A- 500 541
- US-A1- 2019 241 248

## Description

### Object of the invention

The present invention refers to an asymmetric aircraft having a propulsion system that comprises one conventional engine mounted on a wing, and a second engine designed as a boundary layer ingestion (BLI) engine installed at the rear end of the aircraft.

The main object of the present invention is to provide an aircraft with a propulsive efficiency increase by ingesting the slow air in the fuselage boundary layer into the fan of an engine. The required thrust is produced with less power.

Another object of the invention is to maintain the cost-efficient reached on conventional aircrafts although the incorporation of a new propulsion system.

### Background of the invention

Several studies have been carried out with the aim of increasing the propulsion efficiency of an aircraft. A propulsion efficiency increment reduces the environmental impact and the operating cost of an aircraft. One of the aspects that have been identified to improve the propulsion efficiency consists of using a boundary layer ingestion (BLI) engine. A BLI engine refers to an engine mounted at the rear of a fuselage, in such a way that is able to ingest the air coming from the boundary layer of the fuselage.

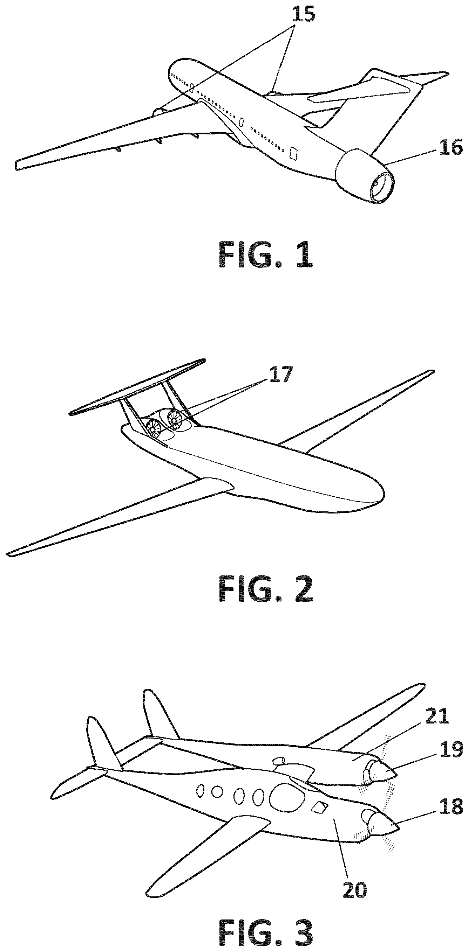

Several aircrafts have been developed in order to ingest the boundary layer. Figure 1 shows an essentially symmetric aircraft with two conventional engines (15) mounted under the wings, and a third auxiliary thruster consisting of a boundary layer ingestion engine (16). This design increases the propulsion efficiency of the aircraft, but it also increases its operational cost with respect to a two-engine aircraft.

Figure 2 shows another essentially symmetric design with two engines (17) installed at the rear end of the fuselage. The operational cost of the aircraft is mainly maintained by the use of two engines, but the installation of the two engines together may entail a risk of losing both engines at a time in an event of an uncontained explosion.

Figure 3 shows an asymmetric aircraft design with a propeller propulsion. The aircraft comprises two kind of fuselages (20, 21), one hosting the pilot and the passengers being carried by a main engine (18), and the other one hosting a potential cargo and being carried by a secondary engine (19). The main engine (18) produces more power than the secondary engine (19). The aircraft has a forward sweep wing configuration, and uses a conventional tail with two vertical stabilizers.

The document GB 500 541 A describes an asymmetrical aircraft. The aircraft is asymmetrical in plan form, having the propelling means arranged on one side of the center line of the supporting surfaces and a fuselage or nacelle on the other. In one form, an engine is arranged on one side of the plane center line a, and a fuselage on the other. However this document does not disclose a boundary layer ingestion (BLI) engine .

The document US2019241248 A1 describes a symmetrical aircraft including a boundary layer ingestion fan defining a centerline and including a plurality of fan blades rotatable about the centerline. The aircraft also includes a fuselage extending between a forward end and an aft end along a longitudinal direction, the boundary layer ingestion fan positioned within the fuselage at the aft end of the fuselage, the fuselage defining an inlet upstream of the boundary layer ingestion fan extending at least about 180 degrees around the centerline of the boundary layer ingestion fan, the fuselage further defining an exhaust downstream of the boundary layer ingestion fan.

There exists several asymmetric aircraft designs but none of them have an asymmetric power plant installation seeking to exploit the BLI effect on any of their engines.

It would therefore be desirable to provide an aircraft design that provides a propulsive efficiency increase, without compromising the security and cost of conventional aircrafts.

### Summary of the invention

The present invention overcomes the above mentioned drawbacks by providing an aircraft according to claim 1, which is asymmetric, and provides an aircraft propulsion efficiency increase without penalizing the cost of the same.

The asymmetric aircraft has a pair of wings -a first and a second, the first wing having a span larger than the second wing-, a pair of engines-a first and a second-, a rear end with a T-tail configuration, and a main landing gear assembly formed by a set of two landing gears.

The first engine of the aircraft is mounted on the larger wing of the aircraft, and the second engine is mounted on the rear end of the aircraft with its centerline aligned with the longitudinal axis of the aircraft. The second engine comprises a casing defining a forward inlet designed to ingest air forming a boundary layer over the fuselage of the aircraft, and an aft outlet to allow the exhaust of the engine. This second engine configured to ingest and consume air forming a boundary layer over the fuselage of the aircraft is thus configured as a boundary layer ingestion engine.

This aircraft configuration increases the propulsive efficiency of the aircraft by ingesting the slow air in the fuselage boundary layer into the fan of the second engine, so that the required thrust is produced with less power.

Also, having two engines maintain the costs of the aircraft, which for economic reasons it is desirable to build it with the smallest number of engines allowed by the regulations, which in the case of large commercial aircraft is two engines.

The aircraft has also an asymmetric main landing gear assembly, which is formed by a first landing gear, attached to the first wing, and a second landing gear attached to an area of the fuselage close to the second wing.

### Brief description of the drawings

For a better comprehension of the invention, the following drawings are provided for illustrative and non-limiting purposes, wherein:
Figure 1 shows a first state of the art aircraft configuration.
Figure 2 shows a second state of the art aircraft configuration.
Figure 3 shows a third state of the art aircraft configuration.
Figure 4 shows a perspective view of the asymmetric aircraft configuration, according to a preferred embodiment of the invention.
Figure 5 shows a front view of the aircraft shown in Figure 4.
Figure 6 shows a plant view of the aircraft shown in Figure 4 and Figure 5.

### Preferred embodiments of the invention

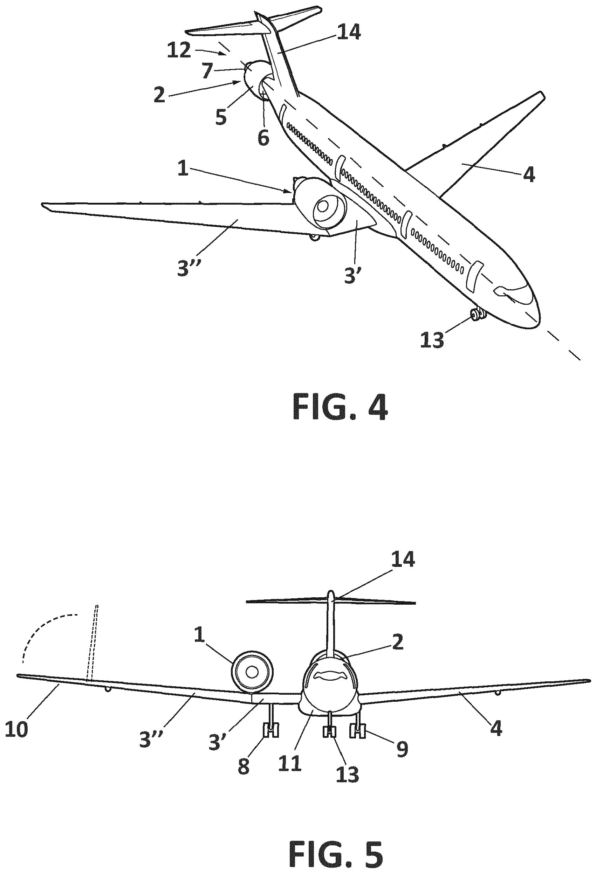

Figure 4 shows an asymmetric aircraft configuration having a first (3', 3") and a second wing (4), the first wing (3', 3") having a span larger than the second wing (4). As shown, the first wing (3', 3") preferably comprises a root section (3') attached to the fuselage, and a tip section (3") extending outerwards from the root section (3'), the root section (3') having a sweep angle different than the tip section (3").

The aircraft has a T tail (14) configuration, and has two engines, a first engine (1) mounted on the first wing (3', 3") of the aircraft, and a second engine (2) mounted on the rear end of the aircraft. The first engine has to be installed in the first wing, since it has a larger span, in order to balance the aircraft laterally.

The second engine (2) has its centerline (12) aligned with the longitudinal axis of the aircraft, and has a casing (5) defining a forward inlet (6) designed to ingest a boundary layer during the flight, and an aft outlet (7) to allow the exhaust of the second engine (2).

The first engine (1) may be installed on the starboard wing to take advantage of the fact that this side of the aircraft is not accessed by passengers during boarding and disembarking operations.

As shown in Figure 5, the aircraft has a main landing gear assembly comprising a first landing gear (8) attached to the first wing (3', 3"), and a second landing gear (9) attached to an area of the fuselage close to the second wing (4).

According to a preferred embodiment, the first landing gear (8) is attached to the rear spar of the root section (3') of the first wing (3', 3").

According to another preferred embodiment, the first wing (3', 3") is configured to receive the first landing gear (8) when retracted.

Alternatively, and according to another preferred embodiment, the fuselage is configured to receive the first landing gear (8) when retracted.

According to another preferred embodiment, the aircraft has a ventral fairing (11) configured to receive the second landing gear (9) when retracted.

As shown in Figure 5, the tip section (3") of the second wing has a foldable tip (10). This will enable extending the wing span to achieve desired performance characteristics without compromising the ability to park the aircraft in standard airport parking aprons.

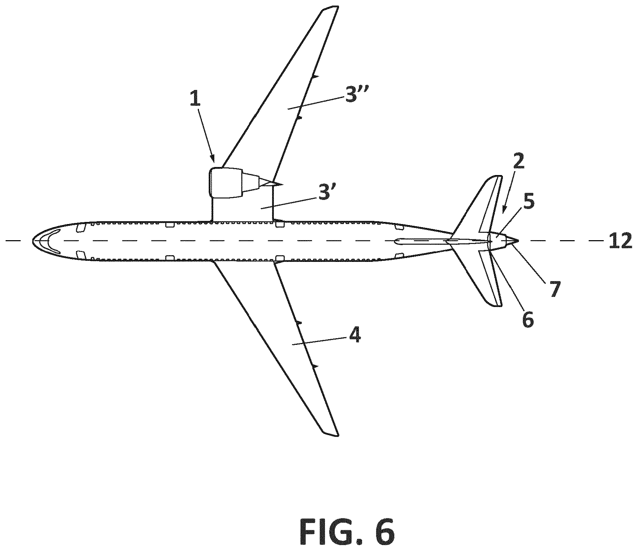

As shown in Figures 4-6, the first engine (1) is preferably mounted on the interface between the root (3') and tip sections (3").

According to another preferred embodiment, the tip section (3") has the same size (chord and span) than the second wing (4).

Finally, according to another preferred embodiment, the first engine (1) is mounted over or under the first wing (3', 3") of the aircraft.

## Claims

1. An asymmetric aircraft having:
- a fuselage
- a first (3', 3") and a second wing (4), each wing (3', 3", 4) extending spanwise from a root section attached to the fuselage of the aircraft to a tip section extending outerwards from the root section,
- a first engine (1), and
- a second engine (2) mounted on the rear end of the aircraft with its centerline (12) aligned with a longitudinal axis of the aircraft, a rear end of the aircraft having a T tail (14), and the second engine (2) having a casing (5) defining a forward inlet (6) designed to ingest air forming a boundary layer over the fuselage of the aircraft during the flight, and an aft outlet (7) to allow the exhaust of the second engine (2),
- and, a main landing gear assembly comprising a first landing gear (8) and a second landing gear (9) ,
**characterized in that**:
- the first wing (3', 3") has a span larger than the second wing (4),
- the first engine (1) is mounted on the first wing (3', 3") of the aircraft,
- the first landing gear (8) is attached to the first wing (3', 3") and the second landing gear (9) is attached to an area of the fuselage close to the second wing (4).

2. An asymmetric aircraft according to claim 1, wherein the first wing (3', 3") comprise a root section (3') attached to the fuselage, and a tip section (3") extending outerwards from the root section (3'), the root section (3') of the first wing (3', 3") having a sweep angle different than the tip section (3") of the first wing (3', 3").

3. An asymmetric aircraft according to claim 2, wherein the first engine (1) is mounted on the interface between the root (3') and tip sections (3") of the first wing (3', 3").

4. An asymmetric aircraft according to any of claims 2-3, wherein the tip section (3") of the first wing (3', 3") has the same size than the second wing (4).

5. An asymmetric aircraft according to any of claims 2-4, wherein the tip section (3") of the first wing (3', 3") has a foldable tip (10).

6. An asymmetric aircraft according to any of claims 2-5, wherein the first landing gear (8) is attached to the rear spar of the root section (3') of the first wing (3', 3").

7. An asymmetric aircraft according to any of claims 2-6, wherein the first wing (3', 3") is configured to receive the first landing gear (8) when retracted.

8. An asymmetric aircraft according to any of claims 2-6, wherein the fuselage is configured to receive the first landing gear (8) when retracted.

9. An asymmetric aircraft according to any preceding claims, wherein the aircraft has a ventral fairing (11) configured to receive the second landing gear (9) when retracted.

10. An asymmetric aircraft according to any preceding claims, wherein the first engine (1) is mounted over or under the first wing (3', 3") of the aircraft.

## Patentansprüche

1. Asymmetrisches Flugzeug, aufweisend:
- einen Rumpf,
- eine erste (3', 3") und eine zweite Tragfläche (4), wobei sich jede Tragfläche (3', 3", 4) spannweitig von einem an dem Rumpf des Flugzeugs angebrachten Wurzelabschnitt zu einem sich von dem Wurzelabschnitt nach außen erstreckenden Spitzenabschnitt erstreckt,
- ein erstes Triebwerk (1) und
- ein zweites Triebwerk (2), das an dem hinteren Ende des Flugzeugs montiert ist und dessen Mittellinie (12) mit einer Längsachse des Flugzeugs fluchtet, wobei ein Heck des Flugzeugs ein T-Leitwerk (14) hat und das zweite Triebwerk (2) ein Gehäuse (5) hat, das einen vorderen Einlass (6) definiert, der zur Aufnahme von Luft ausgelegt ist, die während des Flugs eine Grenzschicht über dem Rumpf des Flugzeugs bildet, und einen hinteren Auslass (7) für den Abgasstrom des zweiten Triebwerks (2),
- und eine Hauptfahrgestellbaugruppe, die ein erstes Fahrgestell (8) und ein zweites Fahrgestell (9) umfasst,
**dadurch gekennzeichnet, dass**:
- die erste Tragfläche (3', 3") eine größere Spannweite als die zweite Tragfläche (4) hat,
- das erste Triebwerk (1) an der ersten Tragfläche (3', 3") des Flugzeugs montiert ist,
- das erste Fahrgestell (8) an der ersten Tragfläche (3', 3") angebracht ist und das zweite Fahrgestell (9) an einem Bereich des Rumpfs in der Nähe der zweiten Tragfläche (4) angebracht ist.

2. Asymmetrisches Flugzeug nach Anspruch 1, wobei die erste Tragfläche (3', 3") einen an dem Rumpf angebrachten Wurzelabschnitt (3') und einen sich von dem Wurzelabschnitt (3') nach außen erstreckenden Spitzenabschnitt (3") umfasst, wobei der Wurzelabschnitt (3') der ersten Tragfläche (3', 3'') einen Pfeilstellungswinkel hat, der von dem des Spitzenabschnitts (3") der ersten Tragfläche (3', 3") verschieden ist.

3. Asymmetrisches Flugzeug nach Anspruch 2, wobei das erste Triebwerk (1) an der Schnittstelle zwischen dem Wurzel- (3') und dem Spitzenabschnitt(3") der ersten Tragfläche (3', 3") montiert ist.

4. Asymmetrisches Flugzeug nach einem der Ansprüche 2 - 3, wobei der Spitzenabschnitt (3") der ersten Tragfläche (3', 3") dieselbe Größe wie die zweite Tragfläche (4) hat.

5. Asymmetrisches Flugzeug nach einem der Ansprüche 2 - 4, wobei der Spitzenabschnitt (3") der ersten Tragfläche (3', 3") eine klappbare Spitze (10) hat.

6. Asymmetrisches Flugzeug nach einem der Ansprüche 2 - 5, wobei das erste Fahrgestell (8) an dem hinteren Holm des Wurzelabschnitts (3') der ersten Tragfläche (3', 3") angebracht ist.

7. Asymmetrisches Flugzeug nach einem der Ansprüche 2 - 6, wobei die erste Tragfläche (3', 3") zur Aufnahme des ersten Fahrgestells (8) ausgestaltet ist, wenn dieses eingefahren wird.

8. Asymmetrisches Flugzeug nach einem der Ansprüche 2 - 6, wobei der Rumpf zur Aufnahme des ersten Fahrgestells (8) ausgestaltet ist, wenn dieses eingefahren wird.

9. Asymmetrisches Flugzeug nach einem der vorhergehenden Ansprüche, wobei das Flugzeug eine Unterrumpfverkleidung (11) hat, die zur Aufnahme des zweiten Fahrgestells (9) ausgestaltet ist, wenn dieses eingefahren wird.

10. Asymmetrisches Flugzeug nach einem der vorhergehenden Ansprüche, wobei das erste Triebwerk (1) über oder unter der ersten Tragfläche (3', 3") des Flugzeugs montiert ist.

## Revendications

1. Aéronef asymétrique comprenant :
un fuselage
une première (3', 3") et une seconde aile (4), chaque aile (3', 3'', 4) s'étendant dans le sens de l'envergure depuis une section d'emplanture fixée au fuselage de l'aéronef jusqu'à une section d'extrémité s'étendant vers l'extérieur depuis la section d'emplanture,
un premier moteur (1), et
un second moteur (2) monté à l'extrémité arrière de l'aéronef, son axe central (12) étant aligné sur l'axe longitudinal de l'aéronef, l'extrémité arrière de l'aéronef ayant un empennage en T (14), et le second moteur (2) ayant un carter (5) définissant une entrée avant (6) conçue pour ingérer l'air formant une couche limite sur le fuselage de l'aéronef pendant le vol, et une sortie arrière (7) pour permettre l'échappement du second moteur (2),
et, un ensemble train d'atterrissage principal comprenant un premier train d'atterrissage (8) et un second train d'atterrissage (9),
**caractérisé en ce que** :
la première aile (3', 3'') a une envergure supérieure à celle de la seconde aile (4),
le premier moteur (1) est monté sur la première aile (3', 3'') de l'aéronef,
le premier train d'atterrissage (8) est fixé à la première aile (3', 3") et le second train d'atterrissage (9) est fixé à une zone du fuselage proche de la seconde aile (4).

2. Aéronef asymétrique selon la revendication 1, la première aile (3', 3") comprenant une section d'emplanture (3') fixée au fuselage, et une section d'extrémité (3'') s'étendant vers l'extérieur depuis la section d'emplanture (3'), la section d'emplanture (3') de la première aile (3', 3'') ayant un angle de flèche différent de celui de la section d'extrémité (3'') de la première aile (3', 3").

3. Aéronef asymétrique selon la revendication 2, le premier moteur (1) étant monté sur l'interface entre les sections d'emplanture (3') et d'extrémité (3'') de la première aile (3', 3").

4. Aéronef asymétrique selon l'une quelconque des revendications 2 et 3, la section d'extrémité (3'') de la première aile (3', 3'') ayant la même taille que la seconde aile (4).

5. Aéronef asymétrique selon l'une quelconque des revendications 2 à 4, la section d'extrémité (3'') de la première aile (3', 3'') ayant une extrémité pliable (10).

6. Aéronef asymétrique selon l'une quelconque des revendications 2 à 5, le premier train d'atterrissage (8) étant fixé au longeron arrière de la section d'emplanture (3') de la première aile (3', 3").

7. Aéronef asymétrique selon l'une quelconque des revendications 2 à 6, la première aile (3', 3'') étant conçue pour recevoir le premier train d'atterrissage (8) lorsqu'il est rétracté.

8. Aéronef asymétrique selon l'une quelconque des revendications 2 à 6, le fuselage étant conçu pour recevoir le premier train d'atterrissage (8) lorsqu'il est rétracté.

9. Aéronef asymétrique selon l'une quelconque des revendications précédentes, l'aéronef ayant un carénage ventral (11) conçu pour recevoir le second train d'atterrissage (9) lorsqu'il est rétracté.

10. Aéronef asymétrique selon l'une quelconque des revendications précédentes, le premier moteur (1) étant monté sur ou sous la première aile (3', 3'') de l'aéronef.
